# EUROPÄISCHE PATENTSCHRIFT

(11) **EP 3 751 204 B1**
(45) Veröffentlichungstag und Bekanntmachung des Hinweises auf die Patenterteilung: **02.11.2022**
(21) Anmeldenummer: 19180255.2
(22) Anmeldetag: 14.06.2019
(51) Int. Cl.: F24D 3/08, F24H 1/50, F28D 20/00, F24D 17/00

(54) **WARMWASSERERWÄRMUNGS- UND SPEICHERSYSTEM**
HOT WATER HEATING AND STORAGE SYSTEM
SYSTÈME DE CHAUFFAGE ET RÉSERVOIR À EAU CHAUDE

(43) Veröffentlichungstag der Anmeldung: 16.12.2020
(73) Patentinhaber: Adapt GmbH, 7000 Chur (CH)
(72) Erfinder: De-Stefani, Alfons, 7000 Chur (CH)
(74) Vertreter: Frischknecht, Harry Ralph

(56) Entgegenhaltungen:
- EP-A1- 0 699 878
- EP-A2- 2 072 912
- WO-A2-2011/133058
- DE-A1-102008 049 954
- US-A- 3 256 991

## Beschreibung

### TECHNISCHES GEBIET

Die vorliegende Erfindung betrifft ein Warmwassererwärmungs- und Speichersystem nach dem Oberbegriff von Anspruch 1.

### STAND DER TECHNIK

In der Schweiz sind die registrierten Fälle von Legionellose in den letzten Jahren deutlich angestiegen. Auch wenn nicht klar ist, worauf dieser Anstieg zurückzuführen ist, wird die Legionellensicherheit von Warmwassersystemen derzeit viel diskutiert. Es wird davon ausgegangen, dass aus hygienischen Gründen 55-60 °C am Speicheraustritt, 52-55 °C in den warm gehaltenen Leitungen und 50 °C an den Zapfstellen Temperaturbereiche sind, welche eine ausreichende Sicherheit bieten. Für Wärmepumpen stellen diese hohen Temperaturanforderungen ein Problem dar, weil sie bei hohen Temperaturen deutlich weniger effizient arbeiten oder diese gar nicht erreichen können. Insbesondere die Warmwasserbereitstellung in Mehrfamilienhäusern, welche meist Warmwasserzirkulationssysteme besitzen, stellt die Wärmepumpentechnologie vor Herausforderungen. Es gibt einige Systemlösungen, welche aber alle mit gewissen Nachteilen behaftet sind.

Beispielhaft wird hier auf Tank-in-Tank-Systeme verwiesen. Ein solches Tank-in-Tank System umfasst der Wärmespeicher Pufferwasser und einen internen Speicher, welcher mit Trinkwasser befüllt ist. Die Beladung kann somit direkt mit Pufferwasser über Stutzen und ohne Wärmetauscher erfolgen. Die Wärmeübertragung auf das Trinkwasser erfolgt allmählich, mit kleiner Leistung und kleinen Temperaturdifferenzen, so dass im Innern des Warmwassertanks annähernd die Temperatur des umgebenden Pufferwassers erreicht werden kann. Die Grösse der internen Speicher und somit die maximalen Zapfmengen sind dabei aber beschränkt. Aufgrund des Oberflächen/Volumen-Verhältnisses ergeht eine gewisse Trägheit bei der Erwärmung des Trinkwassers im Speicher.

Bei sehr grossen Zapfmengen ergeht der Nachteil, dass der interne Speicher durch das Pufferwasser langsam wieder erwärmt werden kann.

Als weiteres Beispiel kann die direkte Erwärmung des Trinkwasser in einem Wärmetauscher dienen, der die Wärme-Leistung nur aus einem Systemwasser-Speicher bezieht, ohne im Trinkwasser ebenfalls zu speichern. Diese Systeme weisen als Nachtteil hohe spontane Erwärmung-Leistungen auf dadurch müssen grössere Oberfläche oder/und es müssen durch die Wärme-Erzeuger grössere Übertemperaturen über der Trinkwassertemperatur erreicht werden können. Hinzu kommt, dass hohe Durchflussmengen am Wärmetauscher, einen erhöhten Druckbedarf erzielen, bzw. die ebenso vorkommenden kleinen Bezugsmengen, zu geringem Wärmeübergang und hoher Grädigkeit führen, was zu höheren Rücklauftemperaturen in den Systemwasserspeicher führt. Dies mindert die Nutzung seiner Energiemenge. Dies wird noch verstärkt durch den Umstand, der dann Eintritt, wenn eine Erwärmung von Zirkulationswasser gefordert ist.

Aus der WO 2011/133058 ist ein weiteres Wärmetauschersystem bekannt geworden, wobei mittels Sonnenkollektoren ein Systemwasserspeicher beheizbar ist, und ein darin liegender Trinkwasserspeicher in wärmetauschender Verbindung mit dem Systemwasserspeicher steht. Über eine zusätzliche externe Heizquelle ist es möglich, den Inhalt des Trinkwasserspeichers zusätzlich zu erwärmen.

### DARSTELLUNG DER ERFINDUNG

Ausgehend von diesem Stand der Technik liegt der vorliegenden Erfindung eine Aufgabe zugrunde, ein Warmwassererwärmungs- und Speichersystem anzugeben, welches die Nachteile des Standes der Technik überwindet. Insbesondere ist es eine besonders bevorzugte Aufgabe der vorliegenden Erfindung ein Warmwassererwärmungs- und Speichersystem anzugeben, welcher bei grösseren Entnahmemengen schnell nachheizen kann.

Diese Aufgabe löst der Gegenstand nach **Anspruch 1**. Demgemäss umfasst ein Warmwassererwärmungs- und Speichersystem mindestens einen Warmwasserspeicher mit mindestens einem Systemmediumtank zur Aufnahme von einem Systemmedium, insbesondere Systemwasser, und einem im Systemmediumtank angeordneten Trinkwassertank mit einem Trinkwassereintritt zur Aufnahme von Trinkwasser und einem Trinkwasseraustritt zur Abgabe von erwärmtem Trinkwasser an ein Verbrauchernetz. Der Systemmediumtank steht zur Aufwärmung des Systemwassers mit mindestens einer Wärmeerzeugervorrichtung fluidisch in Verbindung. Das Trinkwasser wird im Trinkwassertank durch das erwärmte Systemmedium im Systemmediumtank erwärmt. Es findet demnach ein Wärmetausch vom Systemwasser zum Trinkwasser über die Wand des Trinkwassertanks statt. Das Warmwassererwärmungs- und Speichersystem umfasst weiter ein ausserhalb des Warmwasserspeichers angeordneten Wärmetauscher zur Erwärmung von Trinkwasser. Der besagte, ausserhalb des Warmwasserspeichers angeordnete Wärmetauscher steht derart mit dem Trinkwassertank in Verbindung, dass Trinkwasser, welches durch den Wärmetauscher erwärmbar ist, dem Trinkwassertank zugeführt wird. Der besagte ausserhalb des Warmwasserspeichers angeordnete Wärmetauscher kann auch als "externer Wärmetauscher" bezeichnet werden.

Durch die Anordnung des Wärmetauschers ausserhalb des Warmwasserspeichers wird zusätzliche Wärmetauscherfläche geschaffen, wobei definierte Volumenströme durch den externen Wärmetauscher geführt werden können. Auch ergeht der Vorteil, dass die Erwärmung des Trinkwassers im Trinkwassertank bei Durchführung desselben durch den ausserhalb des Warmwasserspeichers angeordneten Wärmetauscher schneller erwärmt werden kann. Das heisst die Aufheizzeit kann gegenüber bekannten Tank-in-Tanksystemen verkürzt und die Nutzung des Speichervolumens erhöht werden.

Auch ergeht der Vorteil, dass im Trinkwassertank, insbesondere auch bei grossen Bezügen, eine möglichst konstante Temperatur gehalten werden kann.

Erfindungsgemäß wird durch den externen Wärmetauscher die für den Wärmeaustausch zwischen dem Systemmedium und dem Trinkwasser relevante Wärmetauscheroberfläche vergrössert. Die gesamte relevante Wärmetauscheroberfläche setzt sich zusammen aus der dem Systemmediumspeicher zugewandten Oberfläche des Trinkwassertanks und aus der Wärmetauscheroberfläche des externen Wärmetauschers.

Vorzugsweise liegt die Temperatur des Systemwassers zwischen 50°C und 65°C, insbesondere zwischen 55°C und 65°C. Das heisst, die Vorlauftemperatur der Wärmeerzeugervorrichtung liegt im gleichen Temperaturbereich. Die Temperatur des Trinkwassers im Trinkwassertank weist einen Sollwert im gleichen Bereich auf, nämlich zwischen 55°C und 65°C. Diese Temperaturbereiche sind bezüglich der Verhinderung der Legionellenbildung vorteilhaft.

Vorzugsweise ist das Volumen des Systemmediumtanks um ein Vielfaches grösser als das Volumen des Trinkwassertanks. Beim Betrieb des Wärmetauschers wird im Rücklauf desselben Systemmedium mit einer geringeren Temperatur in den Systemmediumtank geführt. Hierdurch wird die Temperatur des Systemmediums im Systemmediumtank sinken. Aufgrund des grossen Volumens ist der Effekt des Absinkens aber vergleichsweise klein. Dies ist insbesondere bei Wärme-Erzeugern mit kleiner Leistung von Vorteil.

Als externer Wärmetauscher werden bevorzugt Plattenwärmetauscher und/oder Röhrenwärmetauscher eingesetzt. Es auch möglich, mehr als einen externen Wärmetauscher zu verwenden

Die Wärmeerzeugervorrichtung ist beispielsweise eine thermische Solaranlage, eine Wärmepumpe, ein Ölbrenner oder ein Gasbrenner. Andere Arten von Wärmeerzeugervorrichtungen sind auch denkbar. Das System ist für den Einsatz mit einer Wärmepumpe oder anderen temperatur-sensiblen Erzeugern besonders vorteilhaft, weil die Vorrichtung ermöglicht, mit der geringsten Temperaturüberhöhung über der Warmwassertemperatur zu arbeiten. Es wird also lediglich eine minimale Grädigkeit benötigt.

Die Anordnung des Trinkwassertanks im Systemmediumtank hat zudem den Vorteil, dass eine stufengerechte Nachwärmung von Zirkulationswasser bereitgestellt wird. Darüber hinaus wird der Trinkwassertank im Wesentlichen vollständig durchgespült, wodurch hygienische Vorteile geschaffen werden, insbesondere kann sich kein Bodensatz ansammeln, was hilft, unerwünschte Keime zu vermeiden.

Der Wärmetauscher weist eine Primärseite und eine Sekundärseite auf. Die Primärseite wird mit dem Systemmedium versorgt und das zu erwärmende Trinkwasser wird durch die Sekundärseite geführt. Das Trinkwasser wird dabei durch das Systemmedium im externen Wärmetauscher erwärmt. Das Systemmedium wird direkt aus dem Systemmediumtank oder resp. indirekt aus der Wärmeerzeugervorrichtung der Primärseite zugeführt werden.

Unter der Ausdrucksweise "Primärseite" wird die Systemwasserseite verstanden, bzw. mit "Sekundärseite" die Trinkwasserseite, welche den internen Wärmeübergang entlastet. Das heisst, dass sich die Temperatur des Trinkwassers erhöht bis wenige Grade unter die Systemwassertemperatur, und dass sich die Temperatur des Systemmediums absenkt, bis auf wenige Grade über der Kaltwassertemperatur. Dadurch wird der Energieinhalt des Systemwassers maximal genutzt

Vorzugsweise steht die Primärseite mit ihrem Eintritt mit dem Systemmediumtank derart in Verbindung, dass das Systemmedium aus dem Systemmediumtank durch die Primärseite führbar ist, wobei die Sekundärseite mit ihrem Austritt über eine Mündungsstelle in den Trinkwassertank mündet, und wobei das Trinkwasser beim Durchfliessen der Sekundärseite durch das Systemmedium der Primärseite aufgewärmt wird.

Der Druckbedarf der Wärmeübergangsvorrichtung wird im Vergleich zu Frischwassermodulen gering gehalten, weil eine Pumpe diesen Druckbedarf übernimmt und weil der interne Trinkwasser-Speicher für kurze hohe Bezugsspitzen zur Verfügung steht.

Besonders bevorzugt weist das Warmwassererwärmungs- und Speichersystem eine Vorwärmevorrichtung auf, welche derart angeordnet ist, dass das dem Trinkwassertank zuzuführende Trinkwasser, insbesondere beim Bezug kleinerer Mengen, vorwärmbar ist. Vorzugsweise umfasst die Vorwärmevorrichtung eine Vorwärmzone für den undefinierten Eintrag von temperatursensibler Wärme und einer Mitteltemperaturzone für die definierte Speicherung für Raumheizungszwecke. Bei der Vorwärmevorrichtung handelt es sich um eine Vorrichtung, welche zusätzlich zum externen Wärmetauscher angeordnet ist. Die Vorwärmevorrichtung kann innerhalb des Systemmediumtanks oder ausserhalb des Systemmediumtanks angeordnet sein. In Fliessrichtung des Trinkwassers gesehen ist die Vorwärmevorrichtung vor dem Trinkwassertankvolumen der Nachwärmung angeordnet.

Mit der Vorwärmevorrichtung kann das Trinkwasser aufgewärmt werden. Bei dieser Ausführungsform kann der externe Wärmetauscher bei gleichbleibenden Temperaturniveaus mit geringerer Leistung ausgewählt werden, als wenn keine Vorwärmevorrichtung vorhanden wäre.

In einer ersten Ausführungsform ist die Vorwärmevorrichtung innerhalb des Systemmediumtanks angeordnet, derart, dass ein Wärmetausch zwischen dem Systemmedium und dem Trinkwasser bereitstellbar ist.

Durch die Vorwärmevorrichtung kann die angebots- und nachfrageseitige Bereitstellung von Warmwasser verbessert werden. Beim Bezug von kleinen Trinkwassermengen aus dem Trinkwassertank, erwärmt die Vorwärmevorrichtung stufengerecht, während beim Bezug von grösseren Mengen, der externe Wärmetauscher diese Funktion übernimmt.

Vorzugsweise ist die Vorwärmevorrichtung gemäss der ersten Ausführungsform ein Vorwärmetank oder ein Vorwärmerohr, welche innerhalb des Systemmediumtanks angeordnet sind. Besonders bevorzugt erstrecken sich der Vorwärmetank bzw. das Vorwärmerohr von der unteren Hälfte des Systemmediumtanks in die obere Hälfte, in welcher der Trinkwassertank liegt, hinein. Sowohl der Vorwärmetank als auch das Vorwärmerohr münden in den Trinkwassertank.

Nach einer zweiten Ausführungsform ist die Vorwärmevorrichtung ein ausserhalb des Systemmediumtanks angeordneter zweiter Wärmetauscher, wobei vorzugsweise das erwärmte Systemmedium dem Wärmetauscher als Wärmeträger zur Erwärmung des Trinkwassers zuführbar ist. Das durch den Wärmetauscher erwärmte Trinkwasser wird in den Trinkwassertank geführt.

Bei der ersten und der zweiten Ausführungsform wird von einer Trinkwasserquelle ein Zufluss von Trinkwasser bereitgestellt, wobei der Zufluss über die Vorwärmevorrichtung in den Trinkwassertank und in den ausserhalb des Systemmediumtanks angeordneten Wärmetauscher mündet.

Unter der Ausdrucksweise "Trinkwasserquelle" wird beispielsweise eine Kaltwasserleitung einer Hausinstallation verstanden.

Bei einer dritten Ausführungsform wird auf die Vorwärmevorrichtung verzichtet. In der dritten Ausführungsform wird von einer Trinkwasserquelle ein Zufluss von Trinkwasser bereitgestellt, wobei der Zufluss ausschliesslich in den Wärmetauscher mündet. In allen drei Ausführungsformen mündet die Sekundärseite bevorzugt in den Nachwärmer des Trinkwassertanks.

Die weiteren nachfolgend beschriebenen Merkmale können auf alle hierin beschriebenen Ausführungsformen und Varianten in optionaler Art und Weise angewandt werden.

Bezüglich der Steuerung des Durchflusses durch den externen Wärmetauscher sind verschiedene Varianten von Sensoren und deren Anordnung denkbar. Die folgenden Sensoren können jeweils in Alleinstellung oder kumulativ miteinander eingesetzt werden.

Ein erster Sensor ist ein Strömungswächter, der im Zufluss von der Trinkwasserquelle angeordnet ist, wobei bei Überschreiten eines Strömungsgrenzwertes das Trinkwasser durch den externen Wärmetauscher geführt wird. Typischerweise stellt der Strömungswächter ein elektrisches Signal bereit, mit welchem Pumpen oder Ventile angesteuert werden, welche für den Durchfluss des Trinkwassers durch den externen Wärmetauscher sorgen. Das Trinkwasser kann je nach Ausführungsform und/oder Bezugsmenge von erwärmten Trinkwasser aus dem Trinkwassertank von der Trinkwasserquelle und/oder vom Trinkwassertank dem Wärmetauscher zugeführt werden. Es kann demnach eine dynamische Ladung von Trinkwasser ausgelöst werden.

Weitere Sensoren sind ein im Systemmediumtank angeordneter Temperaturfühler zur Messung der Systemmediumtemperatur und ein im Trinkwassertank angeordneter Temperaturfühler zur Messung der Trinkwassertemperatur. Für Steuerungszwecke wird ein nebst dem Wert für die Trinkwassertemperatur ein Differenzwert zwischen der Systemmediumtemperatur und der Trinkwassertemperatur gebildet. Sofern die Temperatur auf eine Überhitzung hindeutet, bleibt der externe Wärmetauscher deaktiviert. Ist der Temperaturdifferenzwert zu gering, wird auf die externe Nachwärmung verzichtet um den vorhandenen Vorrat nicht zu mischen.

Ein weiterer Sensor kann ein im Trinkwassertank angeordneten Temperaturfühler sein, welcher die Temperatur des Trinkwassers erfasst, wobei bei Unterschreiten eines Grenzwertes das Trinkwasser durch den externen Wärmetauscher erwärmt wird. Dieser Sensor wird vorzugsweise bei der dritten Ausführungsform nicht eingesetzt, weil dort der Nachholbedarf möglichst so klein gehalten werden soll, so dass der interne Wärmeaustausch ausreichend für eine stabile Warmwassertemperatur ist.

Vorzugsweise steht der Eintritt der Primärseite mit einer Rohrleitung mit dem Systemmediumtank in Verbindung und der Austritt Primärseite steht mit einer Rohrleitung mit dem Systemmediumtank in Verbindung, wobei die Rohrleitung, die zum Eintritt führt an einer Stelle aus dem Systemmediumtank geführt wird, welche höher liegt als die Mündungsstelle der Rohrleitung vom Austritt der Primärseite.

Aufgrund der Temperaturverteilung im Systemmediumtank kann durch diese Anordnung sichergestellt werden, dass oben im Systemmediumtank liegendes Wasser, das eine höhere Temperatur als unten liegendes Wasser aufweist, aus dem Systemmediumtank entnommen wird.

Vorzugsweise ist der Trinkwassertank mit einer Vorlaufleitung an ein Verbrauchernetz derart angeschlossen, dass erwärmtes Trinkwasser dem Verbrauchernetz zuführbar ist.

Optional ist der Trinkwassertank mit einer Rücklaufleitung an ein Verbrauchernetz derart angeschlossen, dass vom Verbrauchernetz erwärmtes Trinkwasser dem Trinkwassertank zuführbar ist. Damit kann sichergestellt werden, dass verkeimtes Wasser aus dem Haus, genügend Aufenthaltsdauer ausgesetzt wird, um wieder hygienisiert zu werden.

Vorzugsweise liegt der Trinkwassertank in der oberen Hälfte des Systemmediumtanks liegt. Der Trinkwassertank liegt in dem Bereich, in welchem das Systemmedium die grösste Temperatur aufweist.

Vorzugsweise weist die Primärseite eine Pumpe auf, mit welcher das Systemmedium durch die Primärseite gefördert wird. Vorzugsweise weist die Sekundärseite eine Pumpe auf, mit welcher das Trinkwasser durch die Sekundärseite gefördert wird. Die Pumpe auf der Sekundärseite kann entfallen, wenn das Trinkwasser direkt unter Druck von der Trinkwasserquelle dem Wärmetauscher zugeführt wird..

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1a: eine erste Variante einer ersten Ausführungsform eines Warmwassererwärmungs- und Speichersystem gemäss der vorliegenden Erfindung;
- Fig. 1b: eine zweite Variante einer ersten Ausführungsform eines Warmwassererwärmungs- und Speichersystem gemäss der vorliegenden Erfindung;
- Fig. 2: eine zweite Ausführungsform des Warmwassererwärmungs- und Speichersystem gemäss der vorliegenden Erfindung; und
- Fig. 3: eine dritte Ausführungsform des Warmwassererwärmungs- und Speichersystem gemäss der vorliegenden Erfindung.

### BESCHREIBUNG BEVORZUGTER AUSFÜHRUNGSFORMEN

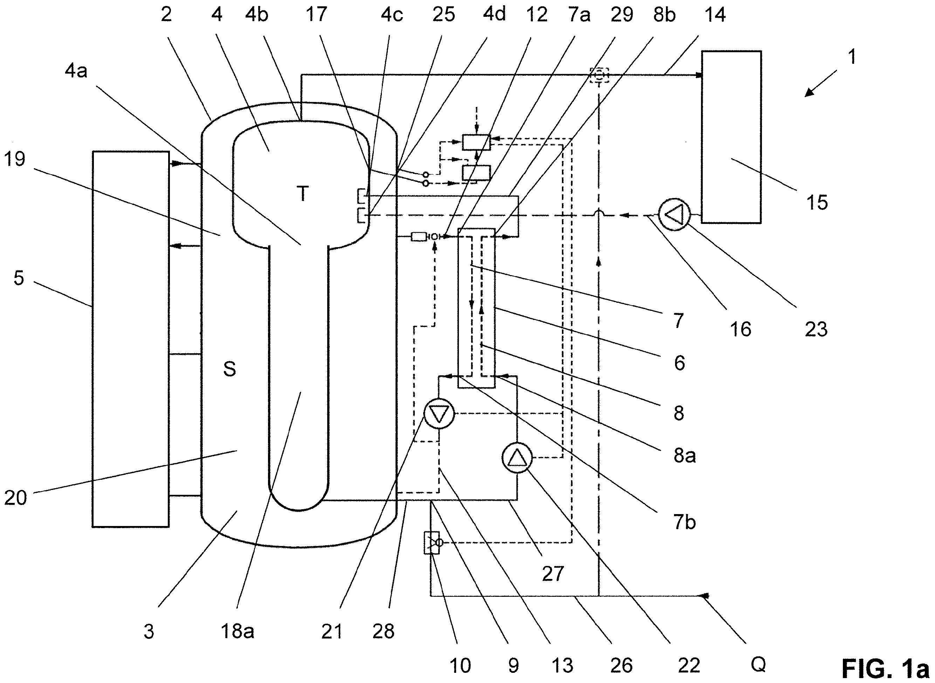

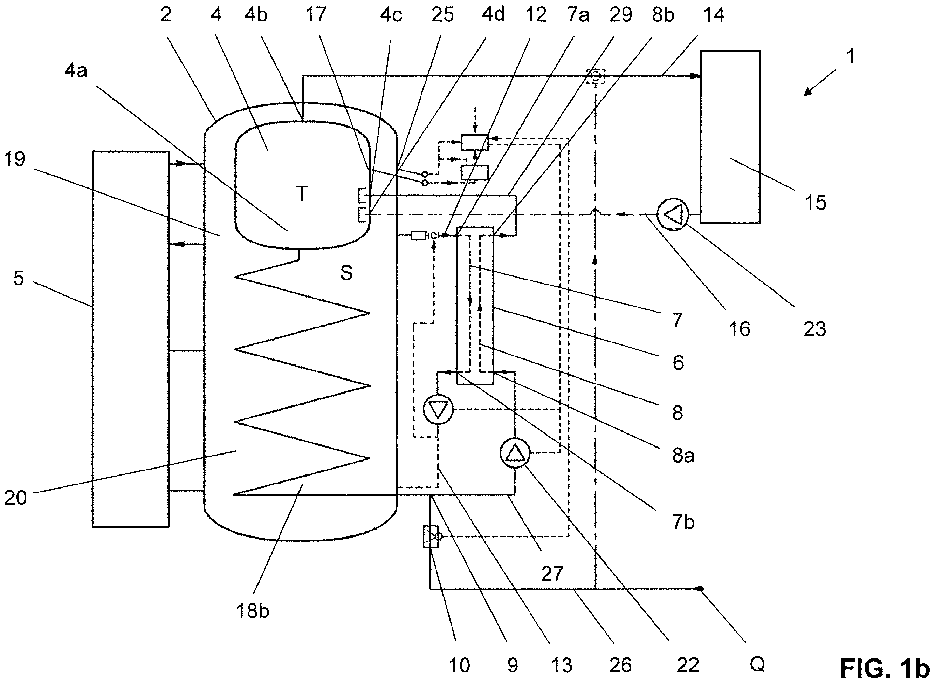

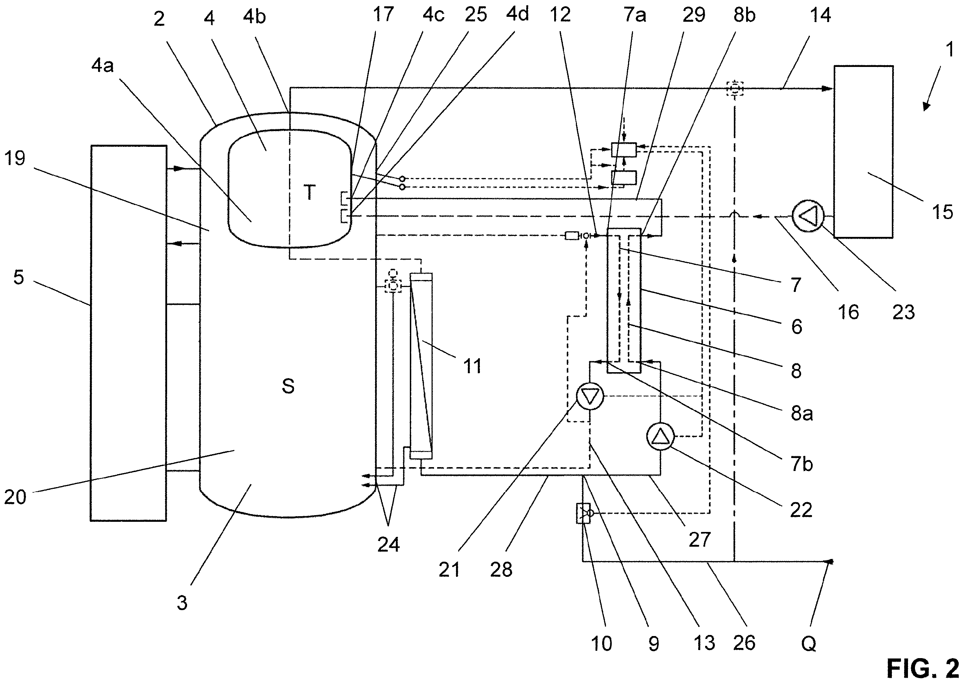

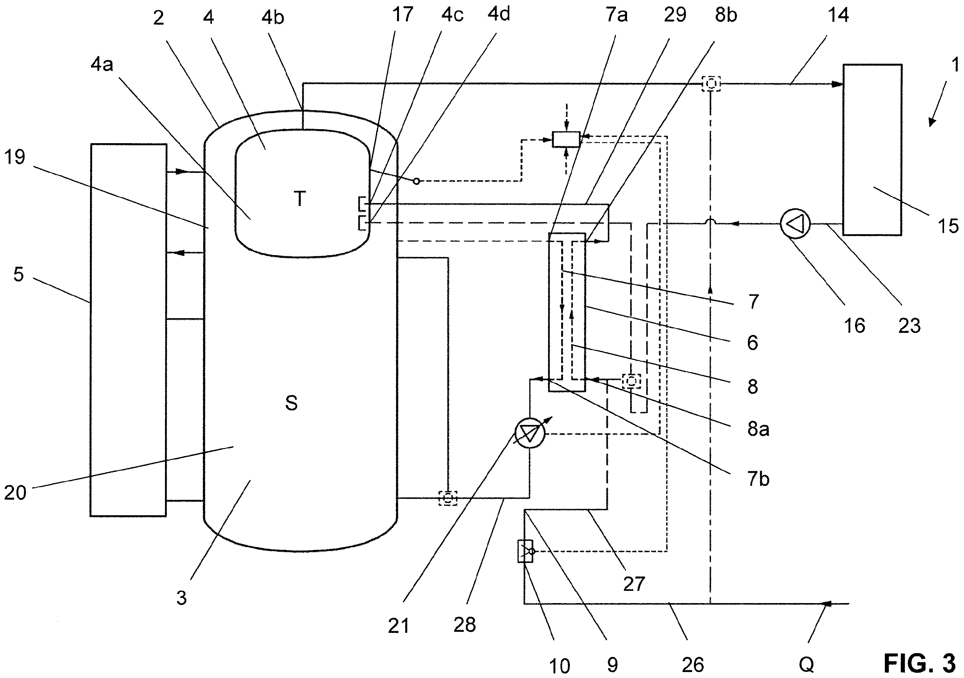

Die Figur 1 zeigt eine erste Ausführungsform eines Warmwassererwärmungs- und Speichersystems 1 gemäss der vorliegenden Erfindung. In der Figur 2 wird zweite Ausführungsform des Warmwassererwärmungs- und Speichersystems 1 gezeigt. Sodann zeigt die Figur 3 eine dritte Ausführungsform eines erfindungsgemässen Warmwassererwärmungs- und Speichersystems 1. Nachfolgend wird das Warmwassererwärmungs- und Speichersystem als Warmwasserspeichersystem bezeichnet.

Die in den Figuren 1 bis 3 gezeigten Warmwasserspeichersysteme 1 umfassen jeweils einen Warmwasserspeicher 2. Der Warmwasserspeicher 2 umfasst einen Systemmediumtank 3 mit einem Systemmedium S und einen im Systemmediumtank 3 angeordneten Trinkwassertank 4 zur Aufnahme von zu erwärmenden Trinkwasser.

Der Systemmediumtank 3 steht mit einer Wärmeerzeugervorrichtung 5 fluidisch in Verbindung. Hierdurch kann das Systemwasser S durch die Wärmeerzeugervorrichtung 5 erwärmt werden. Typischerweise ist die Temperatur des Systemwassers zwischen 50°C und 60°C, insbesondere zwischen 55°C und 65°C. Das heisst, die Vorlauftemperatur der Wärmeerzeugervorrichtung 5 weist ebenfalls einen entsprechenden Wert auf. Das Trinkwasser T im Trinkwassertank 4 ist durch das erwärmte Systemmedium S ebenfalls aufwärmbar. Das heisst, das Trinkwasser T kann die gleiche Temperatur einnehmen wie das Systemmedium S. Der Wärmetausch erfolgt über die Wandbereiche des Trinkwassertanks 4.

Weiter umfasst das Warmwasserspeichersystem 1 gemäss allem Ausführungsformen der vorliegenden Erfindung ein ausserhalb des Warmwasserspeichers 2 angeordneter Wärmetauscher 6. Dieser Wärmetauscher liegt extern zum Inneren es Warmwasserspeichers 2 und wird als externer Wärmetauscher 6 bezeichnet. Der externe Wärmetauscher 6 umfasst eine Primärseite 7 und eine Sekundärseite 8. Die Primärseite 7 und die Sekundärseite 8 sind derart angeordnet, dass ein Wärmetausch zwischen Primärseite 7 und Sekundärseite 8 erreichbar ist.

Die Primärseite 7 ist mit ihrem Eintritt 7a mit dem Systemmediumtank 3 in Verbindung. Die Verbindung ist dabei derart, dass das Systemmedium S aus dem Systemmediumtank 3 hinaus und durch die Primärseite 7 führbar ist. Der Austritt 7b der Primärseite 7 steht in allen drei Ausführungsformen ebenfalls mit dem Systemmediumtank 3 in Verbindung. Das heisst, das durch die Primärseite 7 fliessende Systemmedium S wird vom Systemmediumtank 3 weggeführt, durch die Primärseite 7 hindurchgeführt und anschliessend wieder zum Systemmediumtank 3 zurückgeführt.

Der Sekundärseite 8 mündet in allen Ausführungsformen mit ihrem Austritt 8b an einer Mündungsstelle 4c in den Trinkwassertank 4. Hierzu ist eine Rohrleitung 29 vorgesehen. Austritt 8b und Mündungsstelle 4c stehen über eine Rohrleitung in Verbindung. Durch den Wärmeaustausch von der Primärseite 7 zur Sekundärseite 8 kann Trinkwasser T, welches durch die Sekundärseite 8 hindurchfliesst, mit dem Systemmedium S von der Primärseite 7 entsprechend aufgewärmt werden. Durch dieses Hindurchführen von Trinkwasser T durch die Sekundärseite 8 kann mit hoher Leistung die Temperatur im Trinkwassertank stabil gehalten werden.. Das in der Sekundärseite 8 zu erwärmende Trinkwasser T kann, wie nachfolgend beschrieben wird, von verschiedenen Orten her dem externen Wärmetauscher 6 zugeführt werden.

Der Trinkwassertank 4 weist weiter einen Trinkwassereintritt 4a zur Aufnahme von Trinkwasser T und einen Trinkwasseraustritt 4b zur Abgabe von erwärmten Trinkwasser T an ein Verbrauchernetz 15 auf. Hierzu steht der Trinkwasseraustritt 4b über eine Vorlaufleitung 14 mit einem Verbrauchernetz 15 in fluidischem Kontakt. Über den Trinkwasseraustritt 4b und die Vorlaufleitung 14 kann erwärmtes Wasser aus dem Trinkwassertank 4 dem Verbrauchernetz 15 zur Verfügung gestellt werden.

Das Verbrauchernetz 15 kann über eine optionale Rücklaufleitung 16 abgekühltes Warmwasser wiederum in den Trinkwassertank 4 zurückführen. Hierzu mündet die Rücklaufleitung 16 über eine Mündungsstelle 4d in den Trinkwassertank 4. In der Rücklaufleitung 16 kann eine Pumpe 23 angeordnet sein.

Gemäss der ersten Ausführungsform nach den Figuren 1a und 1b und auch in der zweiten Ausführungsform nach der Figur 2 führt von einer Trinkwasserquelle Q eine Rohrleitung 26 zu einer Verzweigung 9, von welcher dann eine Rohrleitung 27 zum Eintritt 8a der Sekundärseite 8 und eine Rohrleitung 28 zum Trinkwassereintritt 4a des Trinkwassertanks 4 geführt wird. Durch die Rohrleitung 26 kann frisches Trinkwasser dem Trinkwassertank 4 und/oder dem externen Wärmetauscher 6 zugeführt werden. Die Sekundärseite 8 wird demnach vom Trinkwassertank 4 und/oder von der Trinkwasserquelle Q mit aufzuwärmendem Trinkwasser T versorgt. Der Zufluss vom Trinkwassertank 4 und der Zufluss von der Trinkwasserquelle Q werden an einer Verzweigung 9 miteinander zusammengeführt und werden dann gemeinsam zum Eintritt 8a der Sekundärseite 8 geführt. In Fliessrichtung gesehen vor der Verzweigung 9 ist im Zufluss von der Trinkwasserquelle Q ein Strömungswächter 10 angeordnet.

Mit dem Strömungswächter 10 kann die Strömung im Zufluss überwacht werden. Wir nun über die Vorlaufleitung 14 erwärmtes Trinkwasser dem Verbrauchernetz 15 zugeführt, so steigt auf die im Zufluss zuzuführende Mengen an frischem Trinkwasser. Sobald der Massenstrom im Zufluss einen vorbestimmten Grenzwert überschreitet, wird ein Teil des Trinkwassers von der Trinkwasserquelle über den externen Wärmetauscher 6 dem Trinkwassertank 4 zugeführt, wobei das Trinkwasser vor dem Eintritt in den Trinkwassertank 4 erwärmt wird. Hierdurch werden die Pumpen 21, 22 an der Primärseite 7 und der Sekundärseite 8 entsprechend aktiviert. Ein anderer Teil des Trinkwassers wird nach wie vor direkt, das heisst ohne Durchströmen des externen Wärmetauschers 6 dem Trinkwassertank 4 zugeführt. Somit kann auch bei grossen Zapfmengen das Temperaturniveaus im Trinkwassertank 4 gehalten werden.

In den gezeigten Ausführungsformen nach den Figuren 1a, 1b und 2 sind zudem Temperaturfühler 17, 25 angeordnet. Im Systemmediumtank 3 ist der Temperaturfühler 25 zur Messung der Systemmediumtemperatur und im Trinkwassertank 4 ist der Temperaturfühler 17 zur Messung der Trinkwassertemperatur angeordnet ist, wobei ein Temperaturdifferenzwert als Differenz von der Systemmediumtemperatur und der Trinkwassertemperatur gebildet wird, wobei das Trinkwasser durch den externen Wärmetauscher 6 geführt wird, wenn der Temperaturdifferenzwert einen vorbestimmten Grenzwert überschreitet. Durch die gemessene Temperaturdifferenz lassen sich die die Pumpen 21, 22 an der Primärseite 7 und der Sekundärseite 8 des externen Wärmetauschers 6 entsprechend aktivieren, wodurch das Trinkwasser wie oben beschrieben durch den externen Wärmetauscher 6 geführt werden kann.

Sowohl die erste als auch die zweite Ausführungsform weisen jeweils eine Vorwärmevorrichtung 11, 18 auf, über welche das dem Trinkwasserwassertank 4 zuzuführende Trinkwasser T erwärmt werden kann. Das Trinkwasser T gelangt über die Vorwärmevorrichtung 11, 18 zum Trinkwassereintritt 4a.

In der ersten Ausführungsform nach den Figuren 1a und 1b ist die Vorwärmevorrichtung 18 innerhalb des Systemmediumtanks 3 angeordnet. Dabei findet ein Wärmetausch zwischen dem Systemmedium und dem Trinkwasser statt. In der ersten Variante nach der Figur 1a ist die Vorwärmevorrichtung 18 ein Vorwärmetank 18a. In der zweiten Variante nach der Figur 1b ist die Vorwärmevorrichtung 18 ein Vorwärmerohr 18b.

In der zweiten Ausführungsform nach der Figur 2 ist die Vorwärmevorrichtung 11 ausserhalb des Systemmediumtanks 3 angeordnet. Es handelt sich hierbei um einen Wärmetauscher 11. Der Wärmetauscher 11 wird vorzugsweise durch das erwärmte Systemmedium S als Wärmeträgermedium versorgt. Hierzu sind Rohrleitungen 24 angeordnet. Die Primärseite des Röhrentauschers wird dabei durch Schwerkraft versorgt.

In der Figur 3 wird eine dritte Ausführungsform gezeigt. Gleiche Teile sind mit gleichen Bezugszeichen versehen. Ist kein warmgehaltenes Vorwärmvolumen erwünscht, lässt sich mit dieser Ausführungsform sehr ähnliche Ergebnisse erzielen, wobei der Wärmetauscher grösser dimensioniert werden muss.Im Unterschied zur ersten und zur zweiten Ausführungsform gemäss den Figuren 1a, 1b und 2 ist keine Vorwärmevorrichtung angeordnet. Der externe Wärmetauscher 6 steht mit seiner Sekundärseite ausschliesslich mit einer Trinkwasserquelle Q, nicht aber mit dem Trinkwassertank 4 in Verbindung. Gemäss dieser Ausführungsform wird kein Trinkwasser vom Trinkwassertank 4 durch den Wärmetauscher 6 geführt.

Die folgenden Erläuterungen gelten für alle Ausführungsformen in der vorliegenden Erfindung gleichermassen.

Der Eintritt 7a der Primärseite 7 des externen Wärmetauschers steht mit einer Rohrleitung 12 mit dem Systemmediumtank 3 in Verbindung. Der Austritt 7b der Primärseite 7 steht mit einer Rohrleitung 13 mit dem Systemmediumtank 3 in Verbindung. Die Rohrleitung 12, die zum Eintritt 7a führt, wird an einer höheren Stelle aus dem Systemmediumtank 3 geführt, welche höher liegt als die Mündungsstelle der Rohrleitung 13, welche vom Austritt 7a zurück in den Systemmediumtank 3 geführt wird. Hierdurch wird sichergestellt, dass immer Wasser mit einer höheren Temperatur von oben her aus dem Systemmediumtank 3 geführt wird.

In der gezeigten Ausführungsform liegt der Trinkwassertank 4 jeweils in der oberen Hälfte 19 des Systemmediumtanks 3.

In den gezeigten Ausführungsformen sind sowohl in der Sekundärseite 7 als auch in der Primärseite 8 jeweils eine Pumpe 21, 22 angeordnet. Über diese Pumpen 21, 22 lassen sich die Medienströme des Trinkwassers beziehungsweise des Systemmediums entsprechend durch die Sekundärseite 7 und die Primärseite 8 hindurchfördern.

**BEZUGSZEICHENLISTE**

| | | | |
|---|---|---|---|
| 1 | Warmwasserspeichersystem | 18, 18a, 18b | Vorwärmetank |
| 2 | Warmwasserspeicher | 19 | obere Hälfte |
| 3 | Systemmediumtank | 20 | untere Hälfte |
| 4 | Trinkwassertank | 21 | Pumpe |
| 4a | Trinkwassereintritt | 22 | Pumpe |
| 4b | Trinkwasseraustritt | 23 | Pumpe |
| 4c | Mündungsstelle | 24 | Rohrleitungen |
| 4d | Mündungsstelle | 25 | Temperaturfühler |
| 5 | Wärmeerzeugervorrichtung | 26 | Rohrleitung |
| 6 | externer Wärmetauscher | 27 | Rohrleitung |
| 7 | Primärseite | 28 | Rohrleitung |
| 7a | Eintritt Primärseite | 29 | Rohrleitung |
| 7b | Austritt Primärseite | T | Trinkwasser |
| 8 | zweiter Sekundärseite | S | Systemmedium |
| 8a | Eintritt Sekundärseite | Q | Trinkwasserquelle |
| 8b | Austritt Sekundärseite | | |
| 9 | Verzweigung | | |
| 10 | Strömungswächter | | |
| 11 | Vorwärmevorrichtung | | |
| 12 | Rohrleitung | | |
| 13 | Rohrleitung | | |
| 14 | Vorlaufleitung | | |
| 15 | Verbrauchernetz | | |
| 16 | Rücklaufleitung | | |
| 17 | Temperaturfühler | | |

## Patentansprüche

1. Warmwassererwärmungs- und Speichersystem (1) umfassend
mindestens einen Warmwasserspeicher (2) mit mindestens einem Systemmediumtank (3) zur Aufnahme von einem Systemmedium (S), insbesondere Systemwasser, und einem im Systemmediumtank (3) angeordneten Trinkwassertank (4) mit einem Trinkwassereintritt (4a) zur Aufnahme von Trinkwasser (T) und einem Trinkwasseraustritt (4b) zur Abgabe von erwärmtem Trinkwasser an ein Verbrauchernetz (15),
wobei der Systemmediumtank (3) mit mindestens einer Wärmeerzeugervorrichtung (5) fluidisch in Verbindung steht, wobei das Systemmedium (S), insbesondere das Systemwasser, durch die mindestens eine Wärmeerzeugervorrichtung (5) aufwärmbar ist,
wobei das Trinkwasser (T) im Trinkwassertank (4) durch das erwärmte Systemmedium im Systemmediumtank (3) erwärmt wird,
wobei
das Warmwassererwärmungs- und Speichersystem (1) weiter mindestens ein externer Wärmetauscher (6) zur Erwärmung von Trinkwasser (T) umfasst, wobei der externe Wärmetauscher (6) ausserhalb des Warmwasserspeichers (2) angeordnet ist, und wobei der externe Wärmetauscher (6) derart mit dem Trinkwassertank (4) in Verbindung steht, dass Trinkwasser (T), welches durch den externen Wärmetauscher (6) erwärmbar ist, dem Trinkwassertank (4) zugeführt wird, **dadurch gekennzeichnet,**
**dass** der externe Wärmetauscher (6) eine Primärseite (7) und eine Sekundärseite (8) aufweist, wobei die Primärseite (7) mit dem Systemmedium (S) versorgt wird und wobei das zu erwärmende Trinkwasser (T) durch die Sekundärseite (8) geführt wird, derart, dass das Trinkwasser (T) durch das Systemmedium (S) erwärmt wird.

2. Warmwassererwärmungs- und Speichersystem (1) nach Anspruch 1, **dadurch gekennzeichnet,**
**dass** die Primärseite (7) mit ihrem Eintritt (7a) mit dem Systemmediumtank (3) in Verbindung steht, derart, dass das Systemmedium (S) aus dem Systemmediumtank (3) durch die Primärseite (7) führbar ist,
wobei die Sekundärseite (8) mit ihrem Austritt (8b) über eine Mündungsstelle (4c) in den Trinkwassertank (4) mündet, und
wobei das Trinkwasser (T) beim Durchfliessen der Sekundärseite (8) durch das Systemmedium (S) der Primärseite (7) aufgewärmt wird.

3. Warmwassererwärmungs- und Speichersystem (1) nach einem der vorhergehenden Ansprüche, **dadurch gekennzeichnet, dass** das Warmwassererwärmungs- und Speichersystem (1) eine Vorwärmevorrichtung (11, 18) aufweist, welche derart angeordnet ist, dass das dem Trinkwassertank (4) zuzuführende Trinkwasser (T) vorwärmbar ist.

4. Warmwassererwärmungs- und Speichersystem (1) nach Anspruch 3, **dadurch gekennzeichnet, dass** die Vorwärmevorrichtung (18) innerhalb des Systemmediumtanks (3) angeordnet ist, derart, dass ein Wärmetausch zwischen dem Systemmedium (S) und dem Trinkwasser (T) bereitstellbar ist.

5. Warmwassererwärmungs- und Speichersystem (1) nach Anspruch 4, **dadurch gekennzeichnet, dass** die Vorwärmevorrichtung (18) ein Vorwärmetank (18a) oder ein Vorwärmerohr (18b) ist, wobei der Vorwärmetank (18a) bzw. das Vorwärmerohr (18b) vorzugsweise von der unteren Hälfte (20) des Systemmediumtanks (3) in die obere Hälfte (19), in welcher der Trinkwassertank (4) liegt, hineinragt und in den Trinkwassertank (4) mündet.

6. Warmwassererwärmungs- und Speichersystem (1) nach Anspruch 3, **dadurch gekennzeichnet, dass** die Vorwärmevorrichtung (11) ein ausserhalb des Systemmediumtanks (4) angeordneter Wärmetauscher (11) ist, wobei vorzugsweise das erwärmte Systemmedium (S) dem Wärmetauscher (11) als Wärmeträger zur Erwärmung des Trinkwassers (T) zuführbar ist.

7. Warmwassererwärmungs- und Speichersystem (1) nach einem der Ansprüche 3 bis 6, **dadurch gekennzeichnet, dass** von einer Trinkwasserquelle (Q) ein Zufluss von Trinkwasser (T) bereitgestellt wird, wobei der Zufluss über die Vorwärmevorrichtung (18) in den Trinkwassertank (4) und in den externen Wärmetauscher (6) mündet.

8. Warmwassererwärmungs- und Speichersystem (1) nach Anspruch 1, **dadurch gekennzeichnet, dass** von einer Trinkwasserquelle (Q) ein Zufluss von Trinkwasser (T) bereitgestellt wird, wobei der Zufluss ausschliesslich in den externen Wärmetauscher (6) mündet

9. Warmwassererwärmungs- und Speichersystem (1) nach einem der vorhergehenden Ansprüche, **dadurch gekennzeichnet,**
**dass** im Zufluss von der Trinkwasserquelle (Q) ein Strömungswächter (10) angeordnet ist, wobei bei Überschreiten eines Strömungsgrenzwertes das Trinkwasser (T) durch den externen Wärmetauscher (6) geführt wird, und/oder
**dass** im Systemmediumtank (3) ein Temperaturfühler (25) zur Messung der Systemmediumtemperatur und im Trinkwassertank (4) ein weiterer Temperaturfühler (17) zur Messung der Trinkwassertemperatur angeordnet ist, wobei ein Temperaturdifferenzwert als Differenz von der Systemmediumtemperatur und der Trinkwassertemperatur gebildet wird, wobei das Trinkwasser durch den externen Wärmetauscher (6) geführt wird, wenn der Temperaturdifferenzwert einen vorbestimmten Grenzwert überschreitet; und/oder
**dass** im Trinkwassertank (4) ein Temperaturfühler (17) angeordnet ist, welcher die Temperatur des Trinkwassers (T) erfasst, wobei bei Unterschreiten eines Grenzwertes das Trinkwasser (T) durch den externen Wärmetauscher (6) geführt wird

10. Warmwassererwärmungs- und Speichersystem (1) nach einem der vorhergehenden Ansprüche, **dadurch gekennzeichnet, dass** der Eintritt (7a) der Primärseite (7) mit einer Rohrleitung (12) mit dem Systemmediumtank (3) in Verbindung steht und dass der Austritt (7b) der Primärseite (7) mit einer Rohrleitung (13) mit dem Systemmediumtank (3) in Verbindung steht, wobei die Rohrleitung (12), die zum Eintritt (7a) führt an einer Stelle aus dem Systemmediumtank (3) geführt wird, welche höher liegt als die Mündungsstelle der Rohrleitung (13) vom Austritt (7a).

11. Warmwassererwärmungs- und Speichersystem (1) nach einem der vorhergehenden Ansprüche, **dadurch gekennzeichnet,**
**dass** der Trinkwassertank (4) mit einer Vorlaufleitung (14) an ein Verbrauchernetz (15) angeschlossen ist, derart, dass erwärmtes Trinkwasser (T) dem Verbrauchernetz (15) zuführbar ist; und/oder
**dass** der Trinkwassertank (4) mit einer Rücklaufleitung (16) an ein Verbrauchernetz (15) angeschlossen ist, derart, dass vom Verbrauchernetz (15) abgekühltes Trinkwasser dem nachwärmenden Trinkwassertank (4) zuführbar ist.

12. Warmwassererwärmungs- und Speichersystem (1) nach einem der vorhergehenden Ansprüche, **dadurch gekennzeichnet, dass** der Trinkwassertank (4) in der oberen Hälfte (19) des Systemmediumtanks (3) liegt.

13. Warmwassererwärmungs- und Speichersystem (1) nach einem der vorhergehenden Ansprüche, **dadurch gekennzeichnet, dass** die wärmere Primärseite (7) eine Pumpe (21) aufweist, mit welcher das Systemmedium (S) zur Erwärmung der Sekundärseite (7) herangefördert wird und/oder die kältere Sekundärseite (8) eine Pumpe (22) aufweist, mit welcher das Trinkwasser durch die Sekundärseite (8) gefördert wird.

## Claims

1. Hot water heating- and reservoir system (1), comprising at least one hot water reservoir (2) with at least one system medium tank (3) for receiving a system medium (S), especially system water, and a drinking water tank (4) arranged within the system medium tank (3) with a drinking water inlet (4a) for receiving drinking water (T) and a drinking water outlet (4b) for supplying heated drinking water to a consumer network (15),
wherein the system medium tank (3) is fluidically connected to at least one heater device (5), wherein the system medium (S), especially the system water, can be heated by the at least one heater device (5),
wherein the drinking water (T) contained in the drinking water tank (4) is heated by the heated system medium contained in the system medium tank (3),
wherein
the hot water heating- and reservoir system (1) further comprises at least one external heat exchanger (6) for heating drinking water (T), wherein the external heat exchanger (6) is arranged outside of the hot water reservoir (2), and wherein the external heat exchanger (6) is connected to the drinking water tank (4) in such a manner that drinking water (T), which can be heated by the external heat exchanger (6), is supplied to the drinking water tank (4) **characterized in that**
the external heat exchanger (6) comprises a primary side (7) and a secondary side (8), wherein the primary side (7) is supplied with the system medium (S) and wherein the drinking water (T) which is to be heated is guided through the secondary side (8), in such a manner that the drinking water (T) is heated by the system medium (S).

2. Hot water heating- and reservoir system (1) according to claim 1, **characterized in that** the primary side (7) is connected with its inlet (7a) to the system medium tank (3), in a manner such that the system medium (S) can be guided out of the system medium tank (3) through the primary side (7),
wherein the secondary side (8) with its outlet (8b) opens into the drinking water tank (4) via a discharge point (4c), and
wherein the drinking water (T), while flowing through the secondary side (8), is heated by the system medium (S) of the primary side (7).

3. Hot water heating- and reservoir system (1) according to one of the preceding claims, **characterized in that** the hot water heating- and reservoir system (1) comprises a preheating device (11, 18), which is arranged such that the drinking water (T) to be supplied to the drinking water tank (4) can be preheated.

4. Hot water heating- and reservoir system (1) according to claim 3, **characterized in that** the preheating device (18) is arranged within the system medium tank (3), in a manner such that a heat exchange can be provided between the system medium (S) and the drinking water (T).

5. Hot water heating- and reservoir system (1) according to claim 4, **characterized in that** the preheating device (18) is a preheating tank (18a) or a preheating pipe (18b), wherein the preheating tank (18a) or the preheating pipe (18b), respectively, preferably extends from the lower half (20) of the system medium tank (3) into the upper half (19), in which the drinking water tank (4) is arranged, and opens into the drinking water tank (4).

6. Hot water heating- and reservoir system (1) according to claim 3, **characterized in that** the preheating device (11) is a heat-exchanger (11) arranged outside of the system medium tank (4), wherein preferably the preheated system medium (S) can be supplied to the heat-exchanger (11) as a heat-carrier for the purpose of heating the drinking water (T).

7. Hot water heating- and reservoir system (1) according to one of claims 3 to 6, **characterized in that** an inflow of drinking water (T) is provided from a drinking water source (Q), wherein the inflow opens via the preheating device (18) into the drinking water tank (4) and into the external heat-exchanger (6).

8. Hot water heating- and reservoir system (1) according to claim 1, **characterized in that** an inflow of drinking water (T) is provided by a drinking water source (Q), wherein the inflow opens exclusively into the external heat-exchanger (6).

9. Hot water heating- and reservoir system (1) according to one of the preceding claims, **characterized in that**
a flow monitor (10) is arranged in the inflow from the drinking water source (Q), wherein in case a flow limit value is exceeded, the drinking water (T) is guided through the external heat-exchanger (6), and/or that
in the system medium tank (3) a temperature sensor (25) for measuring the system medium temperature and in the drinking water tank (4) a further temperature sensor (17) for measuring the drinking water temperature are arranged, wherein a value of temperature difference results from a difference between the system medium temperature and the drinking water temperature, wherein the drinking water is guided through the external heat-exchanger (6), in case the value of temperature difference exceeds a predetermined limit; and/or that
in the drinking water tank (4) a temperature sensor (17) is arranged, which determines the temperature of the drinking water (T), wherein in case a threshold value is undercut, the drinking water (T) is guided through the external heat-exchanger (6).

10. Hot water heating- and reservoir system (1) according to one of the preceding claims, **characterized in that** the inlet (7a) of the primary side (7) is in connection with a pipeline (12) with the system medium tank (3), and that the outlet (7b) of the primary side (7) is in connection with a pipeline (13) with the system medium tank (3), wherein the pipeline (12), which extends to the inlet (7a), is guided out of the system medium tank (3) at a point, which is located higher than the point of discharge of the pipeline (13) from the outlet (7a).

11. Hot water heating- and reservoir system (1) according to one of the preceding claims, **characterized in that** the drinking water tank (4) is connected to a consumer network (15) by means of a feed line (14), such that heated drinking water (T) can be supplied to the consumer network (15); and/or that the drinking water tank (4) is connected to a consumer network (15) by means of a return line (16), in a manner, such that cooled drinking water from the consumer network (15) can be supplied to the postheating drinking water tank (4).

12. Hot water heating- and reservoir system (1) according to one of the preceding claims, **characterized in that** the drinking water tank (4) lies in the upper half (19) of the system medium tank (3).

13. Hot water heating- and reservoir system (1) according to one of the preceding claims, **characterized in that** the warmer primary side (7) comprises a pump (21), by means of which the system medium (S) is delivered for the purpose of heating the secondary side (7) and/or the colder secondary side (8) comprises a pump (22), by means of which the drinking water is delivered through the secondary side (8).

## Revendications

1. Système de chauffage et de stockage d'eau chaude (1) comprenant
au moins un réservoir d'eau chaude (2) avec au moins un réservoir de milieu de système (3) pour recevoir un milieu de système (S), en particulier de l'eau de système, et un réservoir d'eau potable (4) agencé dans le réservoir de milieu de système (3) avec une entrée d'eau potable (4a) pour recevoir de l'eau potable (T) et une sortie d'eau potable (4b) pour dispenser de l'eau potable chauffée à un réseau de consommation (15),
le réservoir de milieu de système (3) étant en liaison fluidique avec au moins un dispositif générateur de chaleur (5), dans lequel le milieu de système (S), en particulier l'eau de système, peut être chauffée par l'au moins un dispositif générateur de chaleur (5),
dans lequel l'eau potable (T) dans le réservoir d'eau potable (4) est chauffée par le milieu de système chauffé dans le réservoir de milieu de système (3),
dans lequel le système de chauffage et de stockage d'eau chaude (1) comporte en outre au moins un échangeur de chaleur externe (6) pour le chauffage d'eau potable (T), dans lequel l'échangeur de chaleur externe (6) est disposé à l'extérieur du réservoir d'eau chaude (2), et dans lequel l'échangeur de chaleur externe (6) est relié au réservoir d'eau potable (4) de telle manière que l'eau potable (T), qui peut être chauffée par l'échangeur de chaleur externe (6), est acheminée vers le réservoir d'eau potable (4), **caractérisé en ce que**
l'échangeur de chaleur externe (6) a un côté primaire (7) et un côté secondaire (8), le côté primaire (7) étant alimenté en milieu de système (S), et l'eau potable (T) à chauffer est guidée à travers le côté secondaire (8) de telle manière que l'eau potable (T) est chauffée par le milieu de système (S).

2. Système de chauffage et de stockage d'eau chaude (1) selon la revendication 1, **caractérisé en ce que**
le côté primaire (7) est relié par son entrée (7a) au réservoir de milieu de système (3), de telle manière que le milieu de système (S) peut être guidé hors du réservoir de milieu de système (3) à travers le côté primaire (7),
le côté secondaire (8) débouche dans le réservoir d'eau potable (4) avec sa sortie (8b) à travers d'un orifice (4c), et
dans lequel l'eau potable (T) est chauffée lors de son écoulement à travers le côté secondaire (8) par le milieu de système (S) du côté primaire (7).

3. Système de chauffage et de stockage d'eau chaude (1) selon l'une des revendications précédentes, **caractérisé en ce que** le système de chauffage et de stockage d'eau chaude (1) présente un dispositif de préchauffage (11, 18) qui est agencé de telle sorte que l'eau potable (T) à acheminer vers le réservoir d'eau potable (4) peut être préchauffée.

4. Système de chauffage et de stockage d'eau chaude (1) selon la revendication 3, **caractérisé en ce que** le dispositif de préchauffage (18) est disposé à l'intérieur du réservoir de milieu de système (3) de telle sorte qu'un échange de chaleur entre le milieu de système (S) et l'eau potable (T) peut être réalisé.

5. Système de chauffage et de stockage d'eau chaude (1) selon la revendication 4, **caractérisé en ce que** le dispositif de préchauffage (18) est un réservoir de préchauffage (18a) ou un tuyau de préchauffage (18b), dans lequel le réservoir de préchauffage (18a) ou le tuyau de préchauffage (18b) de préférence fait saillie depuis la moitié inférieure (20) du réservoir de milieu de système (3) dans la moitié supérieure (19) dans laquelle se trouve le réservoir d'eau potable (4), et débouche dans le réservoir d'eau potable (4).

6. Système de chauffage et de stockage d'eau chaude (1) selon la revendication 3, **caractérisé en ce que** le dispositif de préchauffage (11) est un échangeur de chaleur (11) disposé à l'extérieur du réservoir de milieu de système (4), le milieu du système chauffé (S) pouvant être acheminé vers l'échangeur de chaleur (11) en tant que caloporteur pour le chauffage de l'eau potable (T).

7. Système de chauffage et de stockage d'eau chaude (1) selon l'une des revendications 3 à 6, **caractérisé en ce qu'**un apport d'eau potable (T) est prévu à partir d'une source d'eau potable (Q), l'apport débouchant via le dispositif de préchauffage (18) dans le réservoir d'eau potable (4) et dans l'échangeur de chaleur (6) externe.

8. Système de chauffage et de stockage d'eau chaude (1) selon la revendication 1, **caractérisé en ce qu'**un apport d'eau potable (T) est prévu à partir d'une source d'eau potable (Q), l'apport débouchant exclusivement dans l'échangeur de chaleur (6) externe.

9. Système de chauffage et de stockage d'eau chaude (1) selon l'une des revendications précédentes, **caractérisé**
**en ce qu'**un moniteur de débit (10) est disposé dans l'apport de la source d'eau potable (Q), l'eau potable (T) étant guidée à travers l'échangeur de chaleur externe (6) en cas de dépassement d'une valeur seuil de débit, et/ou
que dans le réservoir de fluide du système (3), un capteur de température (17) pour mesurer la température du milieu de système, et dans le réservoir d'eau potable (4), un autre capteur de température (25) pour mesurer la température de l'eau potable, est disposé, une valeur de différence de température étant formée comme la différence entre la température du milieu de système et la température de l'eau potable, l'eau potable étant guidée à travers l'échangeur de chaleur externe (6) lorsque la valeur de la différence de température dépasse une limite prédéterminée ; et/ou
**en ce qu'**un capteur de température (17) est disposé dans le réservoir d'eau potable (4), qui détecte la température de l'eau potable (T), l'eau potable (T) étant guidée à travers l'échangeur de chaleur externe (6) lorsque elle tombe en dessous d'une valeur seuil.

10. Système de chauffage et de stockage d'eau chaude (1) selon l'une des revendications précédentes, **caractérisé en ce que** l'entrée (7a) du côté primaire (7) est reliée au réservoir de milieu de système (3) par un tuyau (12) et **en ce que** la sortie (7b) du côté primaire (7) est reliée au réservoir de milieu de système (3) par un tuyau (13), le tuyau (12) menant à l'entrée (7a) étant guidée hors du réservoir de milieu de système (3) en un point qui est plus haut que l'embouchure du tuyau (13) de la sortie (7a).

11. Système de chauffage et de stockage d'eau chaude (1) selon l'une des revendications précédentes, **caractérisé**
**en ce que** le réservoir d'eau potable (4) est relié à un réseau de consommation (15) avec une conduite d'alimentation (14), de sorte que de l'eau potable chauffée (T) peut être acheminée vers le réseau de consommation (15) ; et/ou
**en ce que** le réservoir d'eau potable (4) est relié à un réseau de consommation (15) avec une conduite de retour (16), de sorte que l'eau potable refroidie par le réseau de consommation (15) peut être acheminée vers le réservoir d'eau potable (4) chauffant ultérieurement.

12. Système de chauffage et de stockage d'eau chaude (1) selon l'une des revendications précédentes, **caractérisé en ce que** le réservoir d'eau potable (4) se trouve dans la moitié supérieure (19) du réservoir de milieu de système (3).

13. Système de chauffage et de stockage d'eau chaude (1) selon l'une des revendications précédentes, **caractérisé en ce que** le côté primaire (7) plus chaud présente une pompe (21) avec laquelle le fluide de système (S) pour chauffer le côté secondaire (7) est apporté et/ou le côté secondaire (8) plus froid comporte une pompe (22), avec laquelle l'eau potable est pompée à travers le côté secondaire (8).
